# EUROPÄISCHE PATENTSCHRIFT

(11) **EP 0 751 234 B1**
(45) Veröffentlichungstag und Bekanntmachung des Hinweises auf die Patenterteilung: **14.10.1998**
(21) Anmeldenummer: 95110279.7
(22) Anmeldetag: 30.06.1995
(51) Int. Cl.: C23C 8/22, B23D 61/02

(54) **Stammblatt einer Säge, wie einer Kreis- oder Gattersäge, einer Trennscheibe, einer Schneide- oder einer Schabvorrichtung**
Blade body for saws such as circular or gang saws, cutting discs and cutting or scrapping apparatus
Lame de scie comme scie circulaire, scies à cadre, meules tronçonneuses et de dispositifs de coupage ou de raclage

(43) Veröffentlichungstag der Anmeldung: 02.01.1997
(73) Patentinhaber: CARL AUG. PICARD GMBH & CO. KG., D-42857 Remscheid (DE)
(72) Erfinder: Deimel, Hans Joachim, D-42859 Remscheid (DE)
(74) Vertreter: Patentanwälte Dr. Solf & Zapf

(56) Entgegenhaltungen:
- EP-A- 0 024 106
- AT-A- 372 709
- DE-A- 4 227 447
- FR-A- 2 236 016
- GB-A- 1 559 690
- US-A- 2 513 713
- HAERTEREI TECHNISCHE MITTEILUNGEN, Bd. 50, März 1995 - April 1995 MUNCHEN DE, Seiten 86-92, XP 000504137 F.HOFFMANN ET AL 'DER AUFKOHLUNGSVORGANG'
- HAERTEREI TECHNISCHE MITTEILUNGEN, Bd. 45, März 1990 - April 1990 MUNCHEN DE, Seiten 129-132, XP 000128579 A.MELBER ET AL 'NUMERISCHE SIMULATION DER AUFKOHLUNG VON STAHL UNTER BERÜSICHTIGUNG DER BAUTEILGEOMETRIE'

## Beschreibung

Die Erfindung betrifft ein Stammblatt einer Säge, wie einer Kreis- oder Gattersäge, einer Trennscheibe, einer Schneide- oder einer Schabvorrichtung, hergestellt aus einem Basismaterial, bestehend aus einem ausgehend von seinen Außenwandbereichen aufgekohlten Basisstahl.

Bisher bestand ein solches Basismaterial üblicherweise aus einem Werkzeugstahl mit einem Kohlenstoffgehalt zwischen 0,5 und 1 Prozent oder aus einem niedriglegierten Baustahl, der als Vergütungsstahl verwendet wurde. Die Wärmebehandlung dieser Werkstoffe erfolgt dabei mit der Zielsetzung, ein homogenes Gefüge und eine gleichmäßig hohe Härte über den gesamten Dickenbereich zu erzielen. Die notwendige Zähigkeit des Basismaterials wird durch eine gezielte Anlaßbehandlung erreicht, wobei diese jedoch zwangsläufig mit Härteeinbußen verbunden ist. Je nach Verwendungszweck und spezifischer Belastung des Basismaterials, beispielsweise für Sägen, werden Härten zwischen 37 und 50 RC realisiert.

Zur Erhöhung der Standzeit wird eine große Anzahl von Sägen heute hartverchromt, mit Hartmetall oder Diamant bestückt oder stellitiert. Die Bestückung erfolgt durch Löten oder Sintern. Diese Maßnahmen führen zu deutlichen Standzeitverbesserungen, ohne jedoch die Eigenfestigkeit der Stammblätter zu beeinflussen. Durch die Maßnahmen zur Standzeitverbesserung werden die Fertigungskosten dieser Sägen deutlich erhöht. Dies führt zwangsläufig zu einer Reduktion der Zähne bzw. Segmentzahl, wodurch sich die Schnittgüte verschlechtert und die Schallemission erhöht.

Aus der Firmenschrift: Sie + Wir der Stahlwerke Südwestfahlen, Heft 14/1975, sind Fertigungswege für die verschiedenen Sägetypen beschrieben, wobei darauf hingewiesen wird, daß stets die Forderung nach einem möglichst spannungsarmen und planen Blech mit geringen Entkohlungswerten und homogener Gefügeausbildung gestellt wird. Die eingesetzten Stähle müssen nach dem Härten und Anlassen ein sehr feinkörniges Gefüge mit guter Zähigkeit aufweisen, damit die auftretenden hohen Flieh- und Zerspankräfte sicher aufgefangen werden.

Aus der DE-A-24 31 797 ist ein Verfahren zur Herstellung von hochlegiertem Bandstahl bekannt, der als Schnellschnitt- und Werkzeugstahl, u.a. zum Zwecke der Fertigung flexibler Klingen bzw. Schneiden, eingesetzt wird, wie sie beispielsweise an Rasierklingen oder Metallsägeblättern zu finden sind.

Daher wird ein Bandmaterial mit einem Kohlenstoffgehalt von weniger als 0,3 % nach dem beschriebenen Verfahren zunächst entweder gesintert oder kaltgewalzt und anschließend vollflächig oder partiell im Schneidenbereich mit Kohlenstoff angereichert. Die Kohlenstoffanreicherung erfolgt durchgehend über den gesamten Querschnitt bzw. die Dicke des Bandmaterials. Es stellt sich damit über die gesamte, entsprechend dem vorgesehenen Einsatz des Materials geringe, Dicke des Bandstahls eine KohlenstoffKonzentration mit nahezu konstantem Verlauf ein, die in ihrer Höhe der Kohlenstoffkonzentration von Werkzeugstählen entspricht. Stammblätter aus dem entsprechend dem Verfahren nach der DE-A-24 31 797 hergestellten Material gehören zu der eingangs beschriebenen, die Erfindung betreffenden Art.

Der Artikel "Der Aufkohlungsvorgang" in Härterei Technische Mitteilungen, Bd. 50 (1995) 2, S. 86-93 vermittelt mit spezieller Akzentsetzung im Hinblick auf die mathematische Modellierung einen allgemeinen Überblick über den gemäß dem vorstehend beschriebenen Verfahren eingesetzten Aufkohlungsprozeß. Ein Aufkohlungsvorgang kann in einem gasförmigen Medium, im Salzbad oder in Pulver geschehen und wird im allgemeinen bei Temperaturen zwischen 900 und 1000 °C vorgenommen. Als Kohlenstoffspender dienen dabei Mittel, deren Kohlenstoffaktivität höher sein muß als die des Eisenwerkstoffs. Der vom Aufkohlungsmittel abgegebene Kohlenstoff diffundiert in die Randschicht des aufzukohlenden Werkstücks. Entsprechend den gewählten Prozeßparametern, deren thermodynamische Bedeutung diskutiert wird, stellt sich ein charakteristisches Kohlenstoff-Konzentrationsprofil im Basismaterial ein.

Wichtige Prozeßparameter sind Temperatur und Behandlungszeit, sowie die Kohlenstoffaktivität des Aufkohlungsmittels und die Zusammensetzung des Eisenwerkstoffs. Mit zunehmendem Abstand vom Rand sinkt der Kohlenstoffgehalt kontinuierlich ab, bis er im Werkstoffinneren das Ausgangsniveau des Werkstoffs erreicht.

Als charakteristische und für die Praxis bedeutsame Kenngröße ist die Aufkohlungstiefe Aₜ anzusehen. Die Aufkohlungstiefe Aₜ ist als der senkrechte Abstand von der Oberfläche bis zu einer die Dicke der mit Kohlenstoff angereicherten Schicht kennzeichnenden Grenze definiert. Der Kohlenstoffgehalt, bei dem diese Grenze angenommen wird, unterliegt der Normung (vgl. DIN EN 10 052) und wird üblicherweise mit 0,35 Ma.-% Kohlenstoff vereinbart. Mit steigender Aufkohlungsdauer t nimmt die Aufkohlungstiefe Aₜ eines Werkstücks zu. Die Aufkohlungstiefe Aₜ ist der Quadratwurzel der Aufkohlungsdauer proportional.

In dem o.g. Artikel wird des weiteren die Rolle der geometrischen Gestalt eines aufzukohlenden Werkstücks erörtet. So kommt es bei konvex gekrümmten Werkstückoberflächen, an Kanten oder Spitzen zu einer größeren Aufkohlungstiefe Aₜ, da dem allseitig eindiffundierenden Kohlenstoff ein vergleichsweise geringeres Volumen zur Verfügung steht. Dadurch kann es zu einer Überkohlung kommen, die durch die Ausscheidung von Carbiden bzw. nach dem Härten durch einen unerwünschten erhöhten Restaustenitgehalt gekennzeichnet ist.

Aus der AT-A-372 709 ist ein Schneidwerkzeug, insbesondere eine Säge, aus legiertem Stahl bekannt, das im Bereich seiner Arbeitsflächen bzw. der Zahnung bis zu einer Tiefe von 0,02 bis 0,10 mm mit 1,8 bis 2,2 % Kohlenstoff angereichert ist, wobei der Kohlenstoffgehalt in einer Tiefe von 0,15 bis 0,25 mm den Kohlenstoffgehalt der Stahl-Legierung erreicht. Die Stahl-Legierung besteht aus Eisen mit den unvermeidlichen Verunreinigungen und enthält 0,1-0,3 % Kohlenstoff, 0,2-2,0 % Silicium, 0,2-1,5 % Mangan, 5,0-7,0 % Chrom, 1,0-2,0 Wolfram, 1,0-2,0 % Molybdän, 0-2,0 % Vanadium, 0-0,5 % Titan, 0-0,5 % Niob. Zur Herstellung des Schneidwerkzeugs wird der Werkstück-Rohling, insbesondere das Sägeblatt, einer Aufkohlungsbehandlung bei Temperaturen im Bereich von 850-1050 °C unterworfen, wonach das Härten in Luft, Öl oder im Warmbad erfolgt. Die sehr geringe Aufkohlungstiefe und die starke Aufkohlung führen von der Deckfläche zum nicht mit Kohlenstoff angereicherten Bereich hin zur Ausbildung eines sehr hohen mittleren Kohlenstoffgradienten von etwa 6 bis 14 % C/mm. Auf diese Weise soll insbesondere eine Oberflächenschicht mit erhöhter Verschleißfestigkeit erreicht werden. Bei der eingesetzten Legierung handelt es sich um einen Sonderstahl, der vom Gehalt an Legierungselementen her einer Schnellstahllegierung entspricht, ohne allerdings den entsprechend hohen Kohlenstoffgehalt aufzuweisen. Der Kohlenstoffgehalt ist dabei typisch, der hohe Legierungsgehalt jedoch atypisch für Einsatzstähle. Die Verwendung eines solchen Werkstoffes verfolgt das Ziel, durch die angegebene und in der beschriebenen Weise behandelte Legierung Schnellarbeitsstahl zu ersetzen. Damit ist eine Senkung der Herstellungskosten durch Minderung des Ausschußrisikos und eine Materialeinsparung durch Vermeidung eines Übereinsatzes an Bandstahl bei dessen Umformungsvorgängen beabsichtigt. Dabei kann im Werkstück eine hohe Warmhärte erzielt werden, die durch Anlaßtemperaturen von 500 °C und mehr gekennzeichnet ist. Bei der Kernhärte des Werkstoffes ist dabei wie bei Schnellarbeitsstählen von einem Wert von ca. 45 bis 55 HRC auszugehen.

Der Erfindung liegt die Aufgabe zugrunde, entsprechend der eingangs beschriebenen Art ein Stammblatt einer Säge, wie einer Kreis- oder Gattersäge, einer Trennscheibe, einer Schneide- oder einer Schabvorrichtung anzugeben, aus dem die Säge bzw. die anderen genannten Werkzeuge unter Vermeidung der nachteiligen Wirkung einer Entkohlung des Basismaterials beim Warmwalzen hergestellt sein können, und mit dem eine höhere Härte an der Oberfläche bei gleicher Betriebs- bzw. Bruchsicherheit erzielbar und die Schallemission im Betrieb vermindert ist.

Diese Aufgabe wird dadurch gelöst, daß der Basisstahl mit einem Grundkohlenstoffgehalt von 0,1 bis 0,26 % so aufgekohlt ist, daß der Basisstahl von mindestens einem seiner Außenwandbereiche ausgehend einen mit 0,6 bis 1,1 % Kohlenstoff angereicherten Bereich aufweist, der bei abfallendem Kohlenstoffgehalt in einen nicht aufgekohlten Bereich übergeht, wodurch das Basismaterial eine Sandwichstruktur besitzt, die aus mindestens einem aufgekohlten Bereich und dem nicht aufgekohlten Bereich gebildet ist.

Gleichzeitig wird durch die erfindungsgemäße Verwendung des wie vorstehend beschrieben aufgekohlten Stahles als Basismaterial für die Herstellung eines Stammblattes einer Säge, wie einer Kreis- oder Gattersäge, einer Trennscheibe, einer Schneide- oder einer Schabvorrichtung ein neuer und vorteilhafter Anwendungsbereich erschlossen.

Die Unteransprüche geben vorteilhafte Ausgestaltungen dieses Basismaterials an. Das Basismaterial kann dementsprechend auch eine Sandwichstruktur besitzen, welche aus einer aufgekohlten Außenwand, einem nicht aufgekohlten inneren Kern und einer weiteren aufgekohlten Außenwand des Basisstahls besteht.

Die Tiefe des aufgekohlten Bereichs kann vorzugsweise so ausgewählt werden, daß nach dem Härten und Anlassen mindestens 1/3 der Gesamtdicke des Basisstahls weich bleibt, d.h. im wesentlichen die ursprüngliche Härte des Basisstahls oder eine geringfügig höhere Härte aufweist, während der Rest der Dicke des Basismaterials eine höhere Härte aufweist. Insbesondere ist es bevorzugt, daß nach dem Härten und Anlassen 50 % der Gesamtdicke des Basisstahls hart und 50 % weich sind. Über die Dicke des Basisstahls wird dabei ein Kohlenstoffgradient und ein Härtegradient ausgebildet. Vorzugsweise weist nach dem Härten und Anlassen der Außenwandbereich des Basismaterials eine Härte von 58 RC und der nicht aufgekohlte Kernbereich eine Härte von 32 bis 35 RC auf.

Der Kern sowie die nicht aufgekohlten Bereiche bestehen weiterhin aus dem Mischgefüge des Materials. Bevorzugt sind die physikalischen Eigenschaften des Basismaterials durch unterschiedliche Kohlenstoffgehalte graduiert. Die Aufkohlung des Basisstahls erfolgt vorzugsweise beidseitig auf der gesamten Stahlblechfläche, die Aufkohlung kann jedoch beidseitig auch nur partiell durchgeführt werden.

Beispielsweise werden Sägen hergestellt, die aus einem Stahlblech bestehen, das beispielsweise beidseitig oder auch nur partiell mittels einer thermo-chemischen Behandlung, d.h. Aufkohlung, mit Kohlenstoff angereichert ist. Es wurde überraschenderweise festgestellt, daß bei Verwendung eines Basisstahls mit sehr niedrigem Kohlenstoffgehalt von 0,1 bis 0,26 % und nachfolgendem Aufkohlen und Härten und Anlassen, d.h. nach Abschluß der vollständigen Wärmebehandlung, sich beispielsweise Sägen herstellen lassen, die keinen gleichmäßigen Härte/Festigkeitsverlauf, bezogen auf die Dicke und Fläche, haben. Während herkömmliche Sägen ein durchgängig martensitisches Gefüge mit homogenen Eigenschaften haben, liegt dieses bei den aus dem erfindungsgemäßen Basismaterial hergestellten Sägen nur an den Oberflächen der aufgekohlten Bereiche vor. Der Kern sowie die nicht aufgekohlten Bereiche bestehen weiterhin aus dem Mischgefüge des Rohmaterials. Hierbei ist das Vorhandensein unterschiedlicher Gefügearten jedoch nicht zwingend, sondern auch eine Graduierung der physikalischen Eigenschaften durch unterschiedliche Kohlenstoffgehalte führt zu dem erfindungsgemäßen Basismaterial. Die Zähigkeitsanforderungen an beispielsweise die Sägen werden weitestgehend vom weichen Kern erfüllt, während die Oberfläche mit ihrer Härte die Zerspanungseigenschaften im Fall einer unbestückten oder nicht stellitierten Säge und die Stabilität bestimmt.

Sämtliche Stähle, die unlegiert oder legiert als Einsatzstähle verwendet werden können, sind auch für den Bereich des erfindungsgemäßen Basismaterials geeignet. Vergütungsstähle mit geringen Kohlenstoffgehalten sowie rost- und säurebeständige Stähle mit einem Chromgehalt von 12 bis 13 % können ebenfalls benutzt werden.

Im folgenden werden in der Erfindung verwendbare Stähle angegeben, ohne daß die Erfindung jedoch hierauf beschränkt ist.

| Bez. DIN 17006 | Bez. DIN 17007 | Legierungstyp % |
|---|---|---|
| C 10 | 1.112 | 0,1C |
| C 15 | 1.1141 | 0,15C |
| 15 Cr 3 | 1.7015 | 0,15C, 0,6Cr |
| 16 MnCr 5 | 1.7131 | 0,16C, 1,2Mn, 09Cr |
| 21 MnCr 5 | 1.2162 | 0,2 C, 1,2Mn, 1,1Cr |
| 15 CrNi 6 | 1.5919 | 0,15C, 1,5Cr, 1,6Ni |
| 18 CrNi 8 | 1.5920 | 0,18C, 2,0Cr, 2,0Ni |
| 25 CrMo 4 | 1.7218 | 0,26C, 1,1Cr, 0,3Mo |
| X 10 Cr 13 | 1.4006 | 0,11C, 13Cr |

Im folgenden wird die Erfindung anhand eines Beispiels näher erläutert.

### Beispiel:

Verwendetes Material: C 15 Kaltband geglüht, Dicke: 2,5 mm

Es wurde eine dünnschichtige Aufkohlung durchgeführt, so daß sich bei einem vorher tolerierten Kohlenstoffgehalt von 1,1 % jeweils eine Randschicht mit 0,6 mm Eindringtiefe bei 0,8 % Kohlenstoffgehalt ergab. Die Eindringtiefe des aufgekohlten Blechs wurde mit dem kürzesten zur Verfügung stehenden Programm ausgefahren und ergab eine Durchkohlung mit zum Kern abfallendem Kohlenstoffgehalt. Die nachfolgende Härtung führte bei guter Planheit zu Härten von 64 RC an der Oberfläche bzw. von 40 RC im Kern. Die Anlaßtemperaturreihe von 220-260-300-350-400-450°C und einer Anlaßzeit von abschließend 3 Stunden ergaben bei einer Temperatur von 260° den optimalen Wert von 58 RC an der Oberfläche und ca. 35 RC im Kern. Durch diese Konstellation läßt sich beispielsweise bei Verwendung des Basismaterials für Sägen noch eine Schränkung des Sägezahnes durchführen. Eine aus diesem Basismaterial hergestellte Säge zeichnet sich durch ihre Steifigkeit und Schwingfestigkeit aus, ist sehr leise und verfügt mit einer um 10 RC härteren Härte als bei einer aus dem Stand der Technik bekannten Säge auch über einen sehr guten Verschleißwiderstand.

Die aus dem erfindungsgemäßen Basismaterial hergestellten Sägen besitzen gegenüber den aus dem Stand der Technik bekannten folgende Vorteile:
- Durch den gleichmäßig eingebrachten Kohlenstoff haben die Sägen eine hohe Reproduzierbarkeit bei der Herstellung. Die bisher unvermeidliche Entkohlung beim Warmwalzen kann ausgeglichen werden.
- Durch eine gezielte Aufkohlung und Warmbehandlung können aufgrund des graduierten Aufbaus höhere Härten der Sägen an der Oberfläche bei gleicher Betriebs-bzw. Bruchsicherheit erzielt werden.
- Die Warmrißbildung der Sägen reduziert sich sowohl beim Trennprozeß glühender Stahlprofile als auch bei Temperaturerhöhungen bei hohen Umfangsgeschwindigkeiten in der Metallverarbeitung. Insbesondere beim sogenannten Schmelzsägen.
- Durch den reduzierten Kohlenstoffgehalt im Kern verringert sich die Gefahr einer für die Sicherheit des Bedienpersonals besorgniserregenden Aufhärtung bei ungewollter Wärmeeinbringung.
- Bei unterschiedlichen Gefügen von Oberfläche und Kern entstehen durch die Volumenänderung bei der Gefügeumwandlung Druckspannungen an der Oberfläche. Dementsprechend ergibt sich besonders im Hinblick auf den Eigenspannungszustand der Sägen eine starke aber kontrollierte Inhomogenität, die sich auf die Gebrauchseigenschaften vorteilhaft auswirkt.
- In beiden Fällen (graduierte Eigenschaften oder unterschiedliches Gefüge) kann die gesamte Bauteilfestigkeit erhöht werden. Dadurch reduzieren sich die bei Gebrauch auftretenden Biegeschwingungen insbesondere bei hoher Drehzahl. Eine Verringerung der Schallemission ist die Folge. Alle bisherigen Maßnahmen zur Reduktion der Geräuschemission von Sägen bleiben von der Erfindung unberührt und können zusätzlich Verwendung finden.
- Die Dämpfungseigenschaften von Mischgefügen sind besser als von Martensit. Eine weitere Geräuschreduktion ergibt sich.
- Aufgrund der höheren Bauteilfestigkeit kann die Blattstärke reduziert werden.
- Durch die erreichbaren hohen Härten der Sägen ist eine gewisse Substitution der bislang eingesetzten bestückten und stellitierten Sägen denkbar. Zudem ist zu erwarten, daß durch den ungleichmäßigen Härteverlauf quer zur Schnittrichtung der eigentliche Sägezahn unterschiedlich ausgewaschen wird. Dadurch kann sich ein gewisser "Selbstschärfeffekt" einstellen. Vorteile beim Nachschärfen der Säge sind ebenfalls zu erwarten.
- Durch partielles Aufkohlen können die im Bereich von Löt- oder Schweißverbindungen störenden Kohlenstoffgehalte vermieden werden. Gerade im Bereich der Steinbearbeitung ist dies ein wesentlicher Vorteil.
- Aufgrund des weichen Kerns der Sägen ist es möglich, durch Einbringen eines Keils einen sogenannten gestauchten Zahn herzustellen. Dies war bislang nur bei Nickelstählen möglich.

## Patentansprüche

1. Stammblatt einer Säge, wie einer Kreis- oder Gattersäge, einer Trennscheibe, einer Schneide- oder einer Schabvorrichtung, hergestellt aus einem Basismaterial, bestehend aus einem ausgehend von seinen Außenwandbereichen aufgekohlten Basisstahl,
**dadurch gekennzeichnet,**
daß der Basisstahl mit einem Grundkohlenstoffgehalt von 0,1 bis 0,26 % so aufgekohlt ist, daß der Basisstahl von mindestens einem seiner Außenwandbereiche ausgehend einen mit 0,6 bis 1,1 % Kohlenstoff angereicherten Bereich aufweist, der bei abfallendem Kohlenstoffgehalt in einen nicht aufgekohlten Bereich übergeht, wodurch das Basismaterial eine Sandwichstruktur besitzt, die aus mindestens einem aufgekohlten Bereich und dem nicht aufgekohlten Bereich gebildet ist.

2. Stammblatt nach Anspruch 1,
**dadurch gekennzeichnet,**
daß der Basisstahl von beiden Außenwänden ausgehend mit Kohlenstoff angereicherte Bereiche aufweist, die bei abfallendem Kohlenstoffgehalt in einen nicht aufgekohlten Bereich übergehen.

3. Stammblatt nach Anspruch 1 oder 2,
**dadurch gekennzeichnet,**
daß der Basisstahl ein unlegierter Baustahl ist.

4. Stammblatt nach Anspruch 1 oder 2,
**dadurch gekennzeichnet,**
daß der Basisstahl ein niedriglegierter Baustahl ist.

5. Stammblatt nach einem oder mehreren der Ansprüche 1 bis 4,
**dadurch gekennzeichnet,**
daß nach einem Härten und einem Anlassen des aufgekohlten Basisstahls über die Dicke ein Kohlenstoffgradient und ein Härtegradient ausgebildet sind.

6. Stammblatt nach einem oder mehreren der Ansprüche 1 bis 5,
**dadurch gekennzeichnet,**
daß entsprechend der ausgewählten Tiefe des aufgekohlten Bereichs nach einem Härten und einem Anlassen des aufgekohlten Basisstahls mindestens 1/3 der Dicke des Basismaterials im wesentlichen die ursprüngliche Härte des Basisstahls oder eine geringfügig höhere Härte aufweist und der Rest der Dicke des Basismaterials eine höhere Härte aufweist.

7. Stammblatt nach einem oder mehreren der Ansprüche 1 bis 6,
**dadurch gekennzeichnet,**
daß entsprechend der ausgewählten Tiefe des aufgekohlten Bereichs nach einem Härten und einem Anlassen des aufgekohlten Basisstahls 50 % der Dicke des Basismaterials im wesentlichen die ursprüngliche Härte des Basisstahls oder eine geringfügig höhere Härte aufweisen und etwa 50 % der Dicke des Basismaterials eine höhere Härte aufweisen.

8. Stammblatt nach einem oder mehreren der Ansprüche 1 bis 7,
**dadurch gekennzeichnet,**
daß nach einem Härten und einem Anlassen des aufgekohlten Basisstahls der Außenwandbereich eine Härte von 58 RC und der nicht aufgekohlte Kernbereich eine Härte von 32 bis 35 RC aufweist.

9. Stammblatt nach einem oder mehreren der Ansprüche 1 bis 8,
**dadurch gekennzeichnet,**
daß der Basisstahl im Außenwandbereich beidseitig, jedoch partiell aufgekohlt ist.

10. Stammblatt nach einem oder mehreren der Ansprüche 1 bis 8,
**dadurch gekennzeichnet,**
daß die nicht aufgekohlten Bereiche aus dem Mischgefüge des Basisstahls bestehen.

11. Verwendung eines ausgehend von seinen Außenwandbereichen aufgekohlten Basisstahles, wobei der Basisstahl einen Grundkohlenstoffgehalt von 0,1 bis 0,26 % auf- weist und so aufgekohlt ist, daß der Basisstahl von mindestens einem seiner Außenwandbereiche ausgehend einen mit 0,6 bis 1,1 % Kohlenstoff angereicherten Bereich aufweist, der bei abfallendem Kohlenstoffgehalt in einen nicht aufgekohlten Bereich übergeht, mit einer Sandwichstruktur, die aus mindestens einem aufgekohlten Bereich und aus dem nicht aufgekohlten Bereich gebildet ist,
**gekennzeichnet durch** einen Einsatz als Basismaterial für die Herstellung eines Stammblattes einer Säge, wie einer Kreis- oder Gattersäge, einer Trennscheibe, einer Schneide- oder einer Schabvorrichtung.

12. Verwendung eines Basisstahls nach Anspruch 11,
**gekennzeichnet durch** eines oder mehrere der Merkmale des Kennzeichens der Ansprüche 2 bis 10.

## Claims

1. A master blade of a saw, such as a circular or reciprocating saw, a parting wheel or a cutting or shaving device, produced from a base material consisting of a base steel which is carburised starting from its outer wall regions, characterised in that the base steel having a basic carbon content of 0.1 to 0.26% is carburised to such an extent that the base steel has a region, starting from at least one of its outer wall regions, which is enriched with 0.6 to 1.1% carbon and which, as the carbon content decreases, merges into an uncarburised region, as a result of which the base material has a sandwich structure formed by at least are carburised region and the uncarburised region.

2. A master blade according to Claim 1, characterised in that, starting from both outer walls, the base steel has regions which are enriched with carbon and, as the carbon content decreases, merge into an uncarburised region.

3. A master blade according to Claim 1 or 2, characterised in that the base steel is an unalloyed structural steel.

4. A master blade according to Claim 1 or 2, characterised in that the base steel is a low-alloyed structural steel.

5. A master blade according to one or more of Claims 1 to 4, characterised in that, after hardening and tempering of the carburised base steel, a carbon gradient and a hardness gradient are formed over the thickness.

6. A master blade according to one or more of Claims 1 to 5, characterised in that according to the depth selected for the carburised region, after hardening and tempering of the carburised base steel, at least 1/3 of the thickness of the base material has substantially the original hardness of the base steel or a slightly greater hardness and the rest of the thickness of the base material has a greater hardness.

7. A master blade according to one or more of Claims 1 to 6, characterised in that according to the depth selected for the carburised region, after hardening and tempering of the carburised base steel, 50% of the thickness of the base material has substantially the original hardness of the base steel or a slightly greater hardness and approximately 50% of the thickness of the base material has a greater hardness.

8. A master blade according to one or more of Claims 1 to 7, characterised in that, after hardening and tempering of the carburised base steel, the outer wall region has a hardness of 58 RC and the uncarburised core region has a hardness of 32 to 35 RC.

9. A master blade according to one or more of Claims 1 to 8, characterised in that the base steel in the outer wall region is carburised on both sides but partially.

10. A master blade according to one or more of Claims 1 to 8, characterised in that the uncarburised regions consist of the mixed structure of the base steel.

11. Use of a base steel which is carburised starting from its outer wall regions, the base steel having a basic carbon content of 0.1 to 0.26% and being carburised to such an extent that the base steel has a region, starting from at least one of its outer wall regions, which is enriched with 0.6 to 1.1°% carbon and which, as the carbon content decreases, merges into an uncarburised region having a sandwich structure which is formed by at least one carburised region and the uncarburised region, characterised by use as the base material for producing a master blade of a saw, such as a circular or reciprocating saw, a parting wheel or a cutting or shaving device.

12. Use of a base steel according to claim 11, characterised by one or more of the features of the characterising clauses of Claims 2 to 10.

## Revendications

1. Lame maîtresse pour une scie, telle qu'une scie circulaire ou scie à cadre, un disque à trancher, ou un dispositif de coupe ou de poussée, réalisée dans une matière de base consistant en un acier de base carburé à partir des régions de parois extérieures,
caractérisée en ce que l'acier de base à teneur d'origine en carbone de 0,1 à 0,26% est carburé de manière à ce que l'acier de base présente, en partant d'au moins l'une de ses régions de paroi extérieure, une région enrichie de 0,6 à 1,1% de carbone, cette teneur diminuant ensuite progressivement jusqu'à une région non carburée, la matière de base formant ainsi une structure en sandwich comportant au moins une région carburée et la région non carburée.

2. Lame maîtresse selon la revendication 1,
caractérisée en ce que l'acier de base présente, à partir des deux parois extérieures, des régions enrichies en carbone qui, après une diminution progressive du carbone, finissent en une région non carburée.

3. Lame maîtresse selon la revendication 1 ou 2,
caractérisée en ce que l'acier de base est un acier de construction non allié.

4. Lame maîtresse selon la revendication 1 ou 2,
caractérisée en ce que l'acier de base est un acier de construction faiblement allié.

5. Lame maîtresse selon l'une ou plusieurs des revendications 1 à 4,
caractérisée en ce que, après le durcissement et le revenu de l'acier de base carburé, un gradient de carbone et un gradient de dureté est formé sur toute l'épaisseur.

6. Lame maîtresse selon l'une ou plusieurs des revendications 1 à 5,
caractérisée en ce que, en fonction de la profondeur choisie de la région carburée, après le durcissement et le revenu de l'acier de base carburé, au moins un tiers de l'épaisseur de la matière de base présente sensiblement la dureté d'origine de l'acier de base ou une dureté légèrement supérieure, et que l'épaisseur restante de la matière de base présente une plus grande dureté.

7. Lame maîtresse selon l'une ou plusieurs des revendications 1 à 6,
caractérisée en ce que, en fonction de la profondeur choisie de la région carburée, après le durcissement et le revenu de l'acier de base carburé, 50% de l'épaisseur de la matière de base présente sensiblement la dureté d'origine de l'acier de base ou une dureté légèrement supérieure, et 50% environ de l'épaisseur de la matière de base présente une plus grande dureté.

8. Lame maîtresse selon l'une ou plusieurs des revendications 1 à 7,
caractérisée en ce que, après le durcissement et le revenu de l'acier de base carburé, la région de la paroi extérieure présente une dureté de 58 RC et la région non carburée présente une dureté de 32 à 35 RC.

9. Lame maîtresse selon l'une ou plusieurs des revendications 1 à 8,
caractérisée en ce que l'acier de base est carburé dans la région des parois extérieures sur ses deux côtés, mais partiellement.

10. Lame maîtresse selon l'une ou plusieurs des revendications 1 à 8,
caractérisée en ce que les régions non carburées sont formées par la structure mixte de l'acier de base.

11. Utilisation d'un acier de base carburé à partir de ses régions de parois extérieures, l'acier de base présentant une teneur d'origine en carbone de 0,1 à 0,26% et étant carburé de manière à ce que l'acier de base présente, à partir d'au moins l'une de ses régions de paroi extérieure, une région enrichie de 0,6 à 1,1% de carbone, la teneur diminuant progressivement jusqu'à une région non carburée à structure en sandwich formée par au moins une région carburée et la région non carburée,
caractérisée par une utilisation en tant que matière de base pour la réalisation d'une lame maîtresse d'une scie, telle qu'une scie circulaire ou scie à cadran, d'un disque à trancher ou d'un dispositif de coupe ou de râclage.

12. Utilisation d'un acier de base selon la revendication 11,
caractérisé par l'une ou plusieurs des caractéristiques des revendications 2 à 10.
